(19) Europäisches Patentamt
European Patent Office
Office européen des brevets

(11) **EP 1 801 617 B1**

(12) **FASCICULE DE BREVET EUROPEEN**

(45) Date de publication et mention
de la délivrance du brevet:
**15.10.2014 Bulletin 2014/42**

(51) Int Cl.:
***G01V 1/28*** (2006.01)

(21) Numéro de dépôt: **06291865.1**

(22) Date de dépôt: **30.11.2006**

(54) **Méthode pour mettre à jour un modèle géologique par des données sismiques**

Verfahren zur Aktualisierung eines geologischen Modells mittels seismischer Daten

Method for updating a geological model using seismic data

(84) Etats contractants désignés:
**FR GB NL**

(30) Priorité: **21.12.2005 FR 0513066**

(43) Date de publication de la demande:
**27.06.2007 Bulletin 2007/26**

(73) Titulaire: **Institut Français du Pétrole**
**92852 Rueil Malmaison Cedex (FR)**

(72) Inventeurs:
• **Langlais, Valérie**
**75010 Paris (FR)**
• **Le Ravalec, Mickaële**
**92500 Rueil-Malmaison (FR)**
• **Lucet, Nathalie**
**78800 Houilles (FR)**

(56) Documents cités:
**EP-A1- 1 081 510     WO-A-97/38330**
**US-B1- 6 302 221**

## Description

La présente invention concerne une méthode pour prédire des caractéristiques pétrophysiques d'un réservoir souterrain, comportant la construction et la mise à jour d'un modèle géologique contraint par des données en temps, telles que des données sismiques.

Cette méthodologie s'inscrit dans la thématique de la caractérisation de réservoir, qui a pour objectif de fournir des informations fiables sur les réservoirs afin de mieux prédire leur comportement et d'optimiser leur schéma d'exploitation.

## État de la technique

La mise à jour des modèles géologiques s'appuie sur la théorie des problèmes inverses : certains paramètres du modèle géologique, comme la porosité ou la perméabilité, sont ajustés de façon itérative pour caler à des données d'observation, comme des données sismiques par exemple. Comme dans tous problèmes inverses, il n'y a pas unicité de la solution. Pour réduire les incertitudes sur la prévision de production, il est nécessaire d'intégrer plus de données d'observation (données diagraphiques, de production, sismiques,...) ce qui permet de mieux contraindre les modèles.

Les modèles géologiques constituent une représentation fine de la structure et du comportement d'un réservoir souterrain. Ces modèles sont constitués d'un ensemble de cellules, appelées également mailles, qui forment un maillage. Ce maillage représente une discrétisation du réservoir et doit être représentatif de la structure du réservoir. Pour permettre de reproduire le comportement, statique ou dynamique, d'un réservoir, on associe à ces modèles, dits modèles géocellulaires, des "cartes" bi ou tridimensionnelles de propriétés décrivant le comportement statique et/ou dynamique du réservoir. Pour ce faire, il est connu d'utiliser des méthodes de simulations stochastiques (Journel A., Huijbregts C., 1978, « Mining Geostatistics », Centre de géostatistique et de morphologie mathématique, London, Academic press). Au cours de ces simulations, on produit un champ, ou carte, de propriétés contraint par des données de réservoir mesurées au niveau de puits par exemple.

L'intégration simultanée, dans les simulations stochastiques, de plusieurs types de données, quelles soient statiques ou dynamiques, permet de réduire considérablement l'espace des modèles géologiques admissibles et donc de mieux prédire le comportement des réservoirs étudiés. Certaines méthodes mettent déjà en oeuvre l'intégration jointe des données géologiques et sismiques. Les données sismiques enregistrées sont les amplitudes sismiques. A partir de ces dernières il est possible de calculer un grand nombre d'attributs, appelés attributs sismiques, pour améliorer l'interprétation des données brutes (amplitudes). Les attributs les plus couramment utilisés sont les impédances. Celles-ci sont généralement déterminées à partir d'une technique d'inversion stratigraphique des amplitudes sismiques. Une telle approche est proposée par exemple par Tonellot et al. dans le document suivant par exemple :

- Tonellot, T., Macé, D., et Richard, V., 2001, Joint stratigraphic inversion of angle-limited stacks, 71st Ann.Internal. Mtg., Soc. Expl. Geophys., Expanded Abstracts, AVO 2.6, 227-230.

On peut également obtenir des impédances à une échelle fine à l'aide de techniques stochastiques. Une telle technique est proposée par Bortoli et al. dans le document suivant par exemple :

- Bortoli, L.J., Alabert F., Haas A. et Journel, A.G. 1993. Constraining Stochastic Images to Seismic Data. Geostatistics Troia 82, A. Soares (ed.), 325-337. Kluwer, Dordrecht.

Les amplitudes sismiques sont ici inversées de manière stochastique sur une grille fine. Cette approche permet d'obtenir plusieurs cubes d'impédance, tous en accord avec les amplitudes sismiques.

La contrainte sismique (données issues des amplitudes sismiques que le modèle géologique doit respecter) est souvent introduite comme une variable secondaire guidant la distribution de la variable d'intérêt. Des techniques bien connues de l'homme du métier, telles que des techniques de simulations avec dérive externe, ou de co-simulations en utilisant un ou plusieurs attributs sismiques comme variables secondaires permettent de distribuer des propriétés réservoir contraintes par ces attributs sismiques. On peut par exemple citer :

- Doyen P.M., 1988. Porosity from Seismic Data: A Geostatistical Approach. Geophysics 53(10), 1263-1275

Une autre technique pour utiliser ces impédances sismiques pour contraindre des modèles géologiques est proposée par exemple dans les documents suivants :

- Matheron G., Beucher H., de Fouquet C., Galli A., Guerillot D., and Ravenne C. 1987: Conditional simulation of the geometry of fluvio deltaic reservoirs. SPE 62nd Annual Conference, Dallas, Texas, pp.591-599.

- Matheron G., Beucher H., de Fouquet C., Galli A and Ravenne C., 1988: Simulation conditionnelle à trois faciès dans une falaise de la formation du Brent. Sciences de la Terre, Série Informatique Géologique, 28, pp.213-249.

- Galli A., Beucher H., Le Loc'h G., Doligez B. et groupe Heresim, 1993 : the Pros and Cons of the Truncated Gaussian Method. In : Armstrong M. and Dowd P.A. (eds), Geostatistical Simulations, pp.217-233, Kluwer Academic Publishers, 1993.

Dans ces derniers documents, il s'agit de la technique dite "des gaussiennes seuillées". Dans cette approche, on utilise des attributs sismiques pour établir une matrice de courbe de proportions de lithofaciès. Cette matrice permet alors de guider la répartition spatiale des lithofaciès.

Cependant, aucune des techniques précédemment citées ne permet d'assurer la cohérence entre le modèle géologique ainsi obtenu et les impédances sismiques.

Ainsi, les techniques actuelles proposent de construire des modèles géocellulaires de réservoirs à l'aide de simulations stochastiques permettant de distribuer dans l'espace les lithofaciès et/ou les propriétés réservoir (porosité et perméabilité par exemple). Ces simulations sont contraintes par des données de puits, par des paramètres du modèle géostatistique et éventuellement guidées par un ou des attributs sismiques on peut par example citer WO 97/38330, US 6 302 221 B1 ou EP 1 081 510 A1. Cependant il n'est pas assuré que le modèle géologique obtenu reproduise les impédances sismiques issues des données sismiques observées. De façon plus générale, aucune méthode n'assure que le modèle géologique obtenu reproduise les données sismiques, c'est-à-dire qu'une modélisation des amplitudes sismiques à partir du modèle géologique ne fournit pas un résultat cohérent avec les amplitudes mesurées au cours de la campagne sismique.

La méthodologie proposée permet d'obtenir des modèles géologiques cohérents avec les données sismiques mesurées au cours de la campagne sismique.

**La méthode selon l'invention**

L'invention concerne une méthode pour prédire des caractéristiques pétrophysiques d'un réservoir souterrain, comportant :

- la construction d'un modèle géologique à partir de mesures géologiques acquises en profondeur ;

- la simulation en profondeur de données sismiques ;

- l'acquisition en temps de mesures sismiques sur lesquelles on identifie au moins deux marqueurs sismiques distants l'un de l'autre d'une épaisseur en temps observée $\Delta T_{obs}^{m,n}$ ; et

- la mise en cohérence dudit modèle géologique avec lesdites mesures sismiques par minimisation d'une fonction objectif. La méthode comporte également les étapes suivantes :

- on simule en profondeur des vitesses sismiques permettant d'estimer l'épaisseur en profondeur $\Delta Z_{est}^{m,n}$ desdits marqueurs, et l'on simule une erreur $\varepsilon_{sim}^{m,n}$ réalisée sur cette estimation ;

- on réalise une conversion en temps des données sismiques simulées en profondeur à l'aide d'une vitesse d'intervalle déduite de ladite épaisseur en temps observée $\Delta T_{obs}^{m,n}$ et de ladite erreur $\varepsilon_{sim}^{m,n}$ ;

- on met à jour cette vitesse d'intervalle en comparant, au sein de ladite fonction objectif, ladite épaisseur en temps observée $\Delta T_{obs}^{m,n}$ à une épaisseur en temps $\Delta T_{sim}^{m,n}$ simulée à partir desdites données sismiques, et en modifiant ladite simulation de ladite erreur $\varepsilon_{sim}^{m,n}$ ;

- on effectue ladite mise en cohérence par minimisation de ladite fonction objectif en comparant lesdites mesures sismiques auxdites données sismiques simulées converties en temps ;

- on prédit lesdites caractéristiques pétrophysiques dudit réservoir souterrain à partir dudit modèle géologique ainsi mis en cohérence.

Selon la méthode, la vitesse d'intervalle peut être calculée comme le rapport de l'épaisseur en profondeur $\Delta Z_{est}^{m,n}$ desdits marqueurs corrigée de l'erreur $\varepsilon_{sim}^{m,n}$ $(\Delta Z_{sim}^{m,n} = \Delta Z_{est}^{m,n} + \varepsilon_{sim}^{m,n})$ par l'épaisseur en temps observée $\Delta T_{obs}^{m,n}$.

L'épaisseur en temps $\Delta T_{sim}^{m,n}$ simulée peut être déterminée à partir des étapes suivantes : pour chaque maille d'un maillage dudit modèle géologique comprise entre lesdits marqueurs, on simule l'épaisseur en profondeur de ladite maille que l'on divise par la vitesse sismique de ladite maille, puis on somme verticalement l'ensemble des rapports obtenus pour les mailles comprises entre lesdits marqueurs.

Selon l'invention il peut être avantageux d'utiliser d'une technique de déformation graduelle pour la simulation de ladite erreur $\varepsilon_{sim}^{m,n}$ sur l'estimation de l'épaisseur en profondeur.

Enfin, les données sismiques utilisées pour la mise en cohérence du modèle géologique peuvent être des impédances sismiques d'ondes P et des impédances sismiques d'ondes S.

**Présentation succincte des figures**

D'autres caractéristiques et avantages de la méthode selon l'invention, apparaîtront à la lecture de la description ci-après d'exemples non limitatifs de réalisations, en se référant aux figures annexées et décrites ci-après.

- La figure 1 illustre la méthode globale de calage du modèle géologique.

- La figure 2 illustre en détail les étapes de la méthode selon l'invention.

**Description détaillée de la méthode**

La présente invention comporte une méthode pour construire et mettre à jour un modèle géologique représentatif de la structure et du comportement d'un réservoir souterrain, contraint par des données géologiques acquises en profondeur et des données sismiques acquises en temps. Selon un exemple particulier de réalisation, les données sismiques peuvent être des impédances sismiques. Ainsi la méthode comporte le développement d'une boucle d'inversion permettant d'optimiser un modèle géologique décrit sur un maillage fin verticalement en profondeur, de manière à reproduire de façon satisfaisante les impédances sismiques, décrites verticalement en temps de parcours et issues d'une inversion par exemple. La méthode repose donc sur la théorie des problèmes inverses.

La méthode utilise des données sismiques en temps, c'est-à-dire en fonction des temps de trajet des ondes sismiques, et non pas en fonction de la profondeur. L'enjeu majeur est donc ici l'intégration d'un processus de conversion profondeur/temps avec mise à jour au cours du processus d'optimisation du modèle géologique.

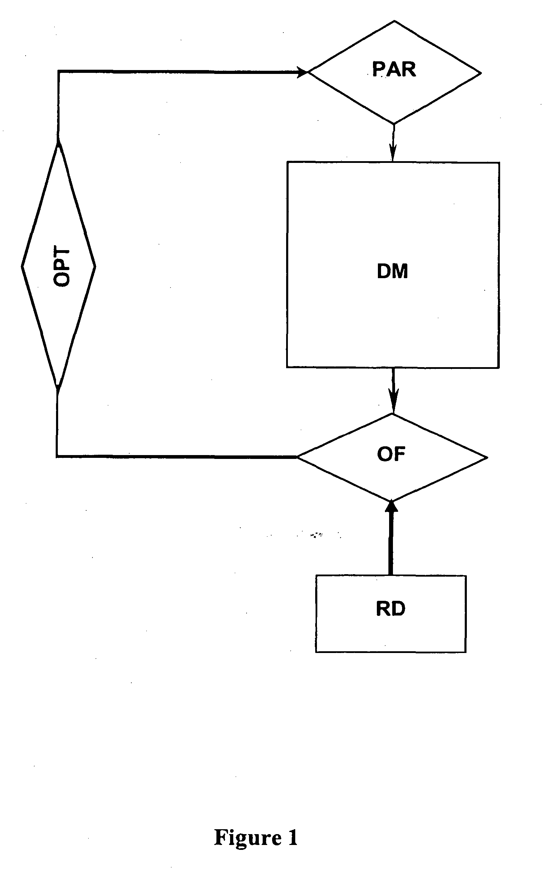

La figure 1 illustre la méthode globale de calage du modèle géologique. La première étape est une étape de paramétrisation (PAR), c'est-à-dire une étape où l'on définit un ensemble de paramètres utilisés au cours de simulations stochastiques permettant de générer les différents éléments des modèles géologique et pétroélastique, ainsi que l'erreur sur les vitesses d'intervalle. Puis, on simule, via un modèle direct (DM), des impédances sismiques converties en temps et des épaisseurs entre marqueurs en temps, qui sont comparées au sein d'une fonction objectif (OF) aux données observées correspondantes (RD). Puis une optimisation (OPT) est réalisée pour modifier les paramètres dans le but de minimiser la fonction objectif.

La méthodologie comporte alors les étapes suivantes :

- Construction du modèle géologique et d'un modèle pétroélastique

- Mise en cohérence du modèle géologique et des impédances sismiques

  - Conversion profondeur/temps avec simulation d'une vitesse d'intervalle et définition d'un critère de qualité de la conversion

  - Définition d'une fonction objectif

  - Optimisation

<u>Étape 1 : Construction du modèle géologique et d'un modèle pétroélastique</u>

La construction d'un modèle géologique et d'un modèle pétroélastique constitue le modèle direct (DM). Il permet de construire une chaîne de modélisation permettant la construction d'un modèle géologique fin, et la simulation numérique des réponses synthétiques relatives aux données que nous souhaitons intégrer : les impédances sismiques.

*1.1-Acquisition des données*

Les données nécessaires à la construction d'un modèle géologique fin cohérent avec les impédances sismiques sont présentées ci-après :

Il faut tout d'abord acquérir des données dites géologiques. Ces données sont acquises en profondeur et proviennent de mesures diagraphies au niveau de puits, de mesures sur carottes de forage, ou fragments de roche issus du sous-sol, ...

Il est bien sur également nécessaire d'acquérir des données sismiques permettant de déterminer, par inversion par exemple, les impédances sismiques. On peut déterminer les impédances sismiques liées aux ondes P, et éventuellement les impédances sismiques liées aux ondes S. Ces données sont acquises en temps et sont notées $I_P^{obs}$ et $I_S^{obs}$. L'exposant *« obs »* signifie qu'il s'agit de données observées, sur lesquelles on souhaite caler le modèle géologique.

La première étape pour construire le modèle géologique consiste à mailler le réservoir.

*1.2- Maillage du réservoir*

Dans un premier temps on découpe le réservoir souterrain en ensemble de volumes appelés mailles. Cet ensemble constitue un maillage du réservoir, et constitue une partie du modèle géologique que l'on souhaite construire. Il s'agit en quelque sorte de l'ossature du modèle géologique. De nombreuses techniques, bien connues de l'homme du métier, permettent de réaliser un tel maillage.

*1.3- Habillage en propriétés réservoir : construction du modèle géologique*

Pour construire le modèle géologique, on associe, dans chacune des mailles de ce maillage, des valeurs caractéristiques des propriétés des terrains géologiques constituant le réservoir. Il peut s'agir de lithofaciès (type de roche ou faciès lithologique) ou de propriété réservoir (porosité, perméabilité, densité...).

La génération du modèle géologique s'effectue avec des outils de modélisation géostatistique tels que ceux décrits dans les documents suivants :

- L.-y. Hu. Gradual deformation and iterative calibration of Gaussian-related Stochastic Models. Mathematical Geology Vol. 32, pp. 87-108, 2000.

- M. Le Ravalec-Dupin, B. Noetinger. Optimization with the Gradual Deformation Method. Mathematical Geology Vol. 34, No. 2, pp. 125-142, 1-2-2002.

- - Matheron G., Beucher H., de Fouquet C., Galli A., Guerillot D., et Ravenne C. 1987: Conditional simulation of the geometry of fluvio deltaic reservoirs. SPE 62nd Annual Conference, Dallas, Texas, pp.591-599.

Selon un exemple de réalisation on utilise un modèle géostatistique basé sur un champ Gaussien aléatoire pour générer les champs de porosité ($\Phi$), et de densité ($\rho$).

Selon un autre mode de réalisation, il peut être avantageux d'habiller en premier lieu le modèle géologique en lithofaciès, c'est-à-dire le type de roche. En effet, cette description du réservoir en lithofaciès permet de travailler par lithofaciès, c'est-à-dire que l'on peut définir des lois de probabilité, des types de simulation différents par lithofaciès rendant ainsi le modèle plus précis. Pour ce faire, on peut par exemple habiller le maillage du modèle géologique en lithofaciès à l'aide de la méthode des gaussiennes seuillées. Cette méthode a l'avantage d'être compatible avec la technique des déformations graduelles, ce qui permet de rendre la méthode plus performante. Toute autre méthode permettant d'utiliser les déformations graduelles dans la résolution du problème inverse peut également être utilisée de façon avantageuse. L'habillage peut être contraint par un ou plusieurs attributs sismiques de manière directe (techniques de simulations avec dérive externe ou de co-simulations par exemple) ou indirecte (courbes de proportions dérivées d'attributs sismiques).

Ensuite, on peut soit attribuer une valeur constante par lithofaciès pour chaque propriété réservoir, soit effectuer un tirage dans des distributions définies par lithofaciès, ou encore réaliser des co-simulations des variables ($\Phi$, $p$) par lithofaciès. On peut également simuler le volume d'argile $V_{SH}$, soit en attribuant une valeur constante par lithofaciès, soit en effectuant un tirage dans des distributions définies par lithofaciès, selon le modèle pétro élastique utilisé.

Selon un mode de réalisation particulier, on détermine en plus les contacts au sein du réservoir entre l'huile et l'eau (« OWC »), et entre le gaz et l'eau (« GWC »). Ces informations permettent d'affiner les valeurs et/ou les distributions en les rendant dépendantes de la position de la maille par rapport aux contacts. La saturation est dépendante de la position au dessus du contact. Si la zone de transition est franche on passe rapidement de Sw=100% à Sw=Swi, par contre on peut avoir des zones de transition plus progressives.

Dans tous les cas, les propriétés réservoir peuvent être associées au maillage du modèle géologique en générant des nombres aléatoires, puis en appliquant une méthode de simulation. Ainsi un ensemble de nombres aléatoires permet de simuler des valeurs de faciès en toute maille du modèle, et un autre ensemble de nombres aléatoires permet de simuler des valeurs de propriétés réservoir en toute maille du modèle.

Par modifications des paramètres utilisés lors des simulations et de l'optimisation (déformation graduelle par exemple), de nouveaux nombres aléatoires peuvent être générés pour mettre à jour le modèle géologique.

Ainsi, à l'issue de cette étape, l'on dispose d'un modèle géologique fin décrit en propriété réservoir (porosité $\Phi$, densité $\rho$, volume d'argile $V_{sh}$ ...). Le modèle peut également être décrit en lithofaciès.

L'opération de paramétrage des modèles géostatistiques est un point fondamental pour garantir le succès de la phase d'intégration des données dans le modèle géologique. En effet, la mise à jour du modèle géologique par les données sismiques repose sur la résolution d'un problème inverse. Le choix des paramètres à caler apparaît dès lors comme essentiel pour rendre possible la minimisation de la fonction objectif, qui mesure l'écart entre les données observées sur le terrain et les résultats de simulation.

*1.4 Habillage en impédances sismiques*

L'un des objectifs de la méthode selon l'invention est de rendre cohérent le modèle géologique ainsi construit avec les impédances sismiques. Pour ce faire on résout un problème inverse qui consiste à simuler des valeurs d'impédances sismiques à partir du modèle géologique, puis de les comparer aux impédances observées.

Pour renseigner le modèle géologique en impédances, on construit un modèle pétro élastique correspondant au modèle géologique renseigné au moins en densité et en vitesses sismiques. On peut procéder selon au moins deux façons :

Selon un premier mode de réalisation, on dispose, aux puits par exemple, de données de densités et de vitesses sismiques. On utilise alors le même principe que celui utilisé pour associer des propriétés réservoir au modèle géologique, pour simuler en toute maille du maillage la densité et les vitesses sismiques.

Le modèle pétro élastique correspond alors au modèle géologique renseigné, par simulation, en vitesse sismique des ondes P ($V_P$) et densité ($\rho$). Si l'on dispose des impédances S observées, il est préférable d'associer également la vitesse sismique des ondes S ($V_S$).

Selon un autre mode de réalisation, seules les variables réservoir suivantes sont générées : la porosité ($\Phi$) et le volume d'argile ($V_{sh}$). On calcule alors les variables élastiques $V_P$ ($V_S$) et $p$, à partir de ces variables réservoir ainsi que des saturations et des pressions initiales acquises ou calculées par ailleurs. Les saturations et pressions sont calculées à partir des contacts et des pressions capillaires, puis on applique un modèle pétro élastique pour passer des données pétro aux données élastiques.

Ensuite, pour construire le modèle en impédances sismiques, il suffit de multiplier la densité par les vitesses sismiques :

$$I_P = \rho.V_P \qquad \text{et} \qquad I_S = \rho.V_S$$

Ainsi, à l'issue de cette étape 1, on dispose d'un modèle géologique fin décrit en propriétés réservoir (porosité, perméabilité, ...), éventuellement en lithofaciès, et en termes d'impédances sismiques simulées $I_P^{sim}$ et éventuellement $I_S^{sim}$. On dispose également d'une paramétrisation du modèle géologique.

Les impédances sismiques simulées à partir de ce modèle géologique doivent être comparées aux impédances sismiques observées, c'est-à-dire aux impédances issues des données sismiques, par inversion stratigraphique par exemple.

Ici encore, l'opération de paramétrage des modèles géostatistiques est un point fondamental pour garantir le succès de la phase d'intégration des données dans le modèle pétro élastique.

<u>Étape 2 : Mise en cohérence du modèle géologique et des impédances sismiques</u>

La cohérence est réalisée par un module inverse qui permet de minimiser une fonction objectif mesurant l'écart entre les résultats de simulation du module direct et les données observées en modifiant un certain nombre de paramètres du module direct. Ces paramètres peuvent être relatifs :

- au modèle géologique (distribution des faciès, des porosités, des perméabilités, etc...) ;

- au modèle pétroélastique (loi de Gassmann, etc...) ;

- au modèle de conversion profondeur/temps (loi de vitesse).

Pour mettre à jour le modèle géologique et le rendre cohérent avec les impédances sismiques observées, on utilise une méthode itérative basée sur le calcul d'une fonction objectif. Cette fonction détermine l'écart entre les valeurs simulées et les valeurs observées. On modifie alors les paramètres de simulation pour simuler de nouvelles valeurs et réduire l'écart avec les données observées, donc diminuer la valeur de la fonction objectif. Le processus est répété jusqu'à ce que la fonction objectif soit suffisamment faible pour admettre que le calage entre les données simulées et les données observées est acceptable.

Selon la méthode, on souhaite améliorer, à chaque itération, le calage des impédances sismiques, mais également la conversion profondeur/temps. Pour ce dernier, on définit un critère de qualité comme décrit ci-après.

<u>2.1- Conversion profondeur/temps</u>

La mise à jour du modèle géologique se fait par comparaison des impédances sismiques simulées et observées à travers un processus itératif décrit ci-après. La difficulté majeure pour comparer de telles données provient du fait que les impédances sismiques du modèle géologique sont simulées en profondeur, alors que les impédances sismiques issues directement des données sismiques sont observées en temps. Il est donc nécessaire de convertir les données dans la même échelle, temps ou profondeur.

Une solution consiste à déterminer la vitesse du milieu pour transformer les profondeurs en temps (ou réciproquement). Au cours de l'étape de construction du modèle pétro élastique, les vitesses sismiques ont déjà été simulées. Il est donc possible de convertir les données simulées en profondeur dans l'espace temps. Cependant, ces vitesses ne sont pas exactes, puisqu'elles sont simplement simulées.

De plus, il est connu que la vitesse varie en fonction de la profondeur et en fonction des lithologies rencontrées. Une technique consiste donc à subdiviser verticalement les données sismiques en définissant des zones où la vitesse est sensiblement constante ou vérifie une même loi en fonction de la profondeur. On sait que les ondes sismiques émises dans le sous-sol sont réfléchies par des marqueurs, appelés marqueurs sismiques, qui correspondent à des contrastes d'impédances. Or l'impédance est une fonction de la densité et de la vitesse. Ainsi, on définit, par une opération de pointé sismique, un ensemble de marqueurs sismiques, puis, entre chacun d'eux, on définit une vitesse d'intervalle à partir des vitesses sismiques simulées ($V_P$).

Pour deux marqueurs identifiés (pointés), notés m et n, on note $V_{sim}^{m,n}$ la vitesse d'intervalle des ondes P simulée entre ces marqueurs. Par définition, on connaît l'épaisseur en temps entre ces marqueurs. On note cette épaisseur en temps : $\Delta T_{obs}^{m,n}$. . L'indice « *obs* » indique qu'il s'agit d'une épaisseur en temps observée, issue du pointé sismique.

A l'aide de la vitesse d'intervalle simulée entre les marqueurs m et n, on peut estimer l'épaisseur entre ces marqueurs en profondeur $\Delta Z_{est}^{m,n}$ :

$$\Delta Z_{est}^{m,n} = V_{sim}^{m,n} . \Delta T_{obs}^{m,n}$$

On peut ainsi grâce à cette vitesse d'intervalle convertir en temps les impédances sismiques simulées en profondeur. La comparaison avec les données observées en temps est alors aisée. Cependant, cette vitesse d'intervalle simulée, induit inévitablement des erreurs. Il ne s'agit que d'une valeur simulée. Ceci induit non seulement que la conversion n'est pas tout à fait exacte mais également que la comparaison entre les impédances simulées et les impédances observées ne sera pas juste, car ne mettant pas en relation des impédances situées à une même cote (profondeur ou temps). Ceci peut être critique surtout au niveau des interfaces.

C'est pourquoi, selon la méthode, cette loi de conversion est mise à jour pendant le processus de calage aux données d'impédances sismiques. Pour ce faire, il est nécessaire de définir d'une part un critère de qualité permettant de déterminer si la conversion est améliorée ou non et d'autre part, un paramètre permettant, par modification, d'améliorer la conversion. Un premier paramètre modifiable est bien entendu la vitesse des ondes P ($V_P$) simulée. La méthode propose une méthode itérative permettant de mettre à jour le modèle géologique tout en mettant à jour la loi de conversion profondeur/temps du modèle géologique. Pour ce faire on compare non seulement les impédances sismiques mais également les épaisseurs en temps entre des marqueurs identifiés.

*Simulation de la vitesse d'intervalle*

La loi de conversion, c'est-à-dire la vitesse d'intervalle simulée $V_{sim}^{m,n}$, induit inévitablement des erreurs. Selon l'invention, cette erreur notée $\varepsilon$ est exprimée comme une carte de variance. Cette erreur est relative aux épaisseurs en profondeur, elle est liée à l'erreur sur le temps et sur la vitesse. Une réalisation gaussienne de cette erreur est simulée pour chaque intervalle défini entre deux marqueurs, $\varepsilon_{sim}^{m,n}$, et l'épaisseur simulée du réservoir est définie comme la somme de l'épaisseur estimée $\Delta Z_{est}^{m,n}$ et de cette erreur $\varepsilon_{sim}^{m,n}$ :

$$\Delta Z_{sim}^{m,n} = \Delta Z_{est}^{m,n} + \varepsilon_{sim}^{m,n}$$

Ainsi les paramètres nécessaires à la réalisation gaussienne de l'erreur $\varepsilon_{sim}^{m,n}$, qui sont des nombres aléatoires gaussiens, peuvent être modifiés pour faire varier $\Delta Z_{sim}^{m,n}$ utilisée pour le calcul d'un critère de qualité de la conversion comme décrit ultérieurement.

Les épaisseurs de chaque maille *c* du maillage du modèle géologique comprises entre les marqueurs *m* et *n*, seront recalculées pour prendre en compte $\varepsilon_{sim}^{m,n}$. Cette erreur pourra être répartie de façon homogène $\left( \dfrac{dz_{sim}^{c}}{\Delta Z_{sim}^{m,n}} = \dfrac{dz_{est}^{c}}{\Delta Z_{est}^{m,n}} \right)$ ou bien sur certaines couches uniquement.

La conversion profondeur/temps est alors réalisée en calculant entre deux marqueurs sismiques une vitesse d'intervalle définie par : $V_{int}^{m,n} = \dfrac{\Delta Z_{sim}^{m,n}}{\Delta T_{obs}^{m,n}}$

Cette vitesse d'intervalle est appliquée de façon homogène à tous les échantillons de l'intervalle pour assurer la cohérence entre les mesures que l'on souhaite comparer.

Selon un mode de réalisation particulier, un filtrage dans la bande passante de la sismique est appliqué à l'issu de cette étape. En effet, le modèle géologique est à plus haute fréquence que la sismique, il est donc nécessaire de se ramener dans la bande de fréquences de la sismique. On effectue pour cela un filtrage des impédances de compression (P) et de cisaillement (S) issues du modèle pétro élastique. La fonction de filtrage choisie (filtre de Martin par exemple) permet l'utilisation d'un filtre passe-bande, coupe-bande, passe-bas ou passe-haut. Ce filtrage fréquentiel des cubes en $I_P$ ($I_S$) simulés est appliqué afin d'avoir un contenu fréquentiel similaire au cube sismique des impédances observées. Deux options sont possibles:

a) Filtrer les hautes fréquences (filtre passe bas)

b) Filtrer les très basses fréquences et les hautes fréquences (filtre passe bande). Dans ce cas les impédances sismiques observées seront aussi filtrées des très basses fréquences.

*Définition d'un critère de qualité de la conversion*

A partir du pointé sismique de deux marqueurs *m* et *n*, on connaît leur épaisseur en temps $\Delta T_{obs}^{m,n}$. A partir du modèle géologique et de son habillage en propriété élastique, il est possible de simuler l'épaisseur en temps entre les marqueurs *m* et *n*, notée $\Delta T_{sim}^{m,n}$. Ainsi, une bonne conversion des données acquises en profondeur dans une échelle en temps doit permettre de caler l'épaisseur en temps globale entre les deux marqueurs, c'est-à-dire que $\Delta T_{obs}^{m,n}$ et $\Delta T_{sim}^{m,n}$ doivent être quasi égaux.

Cette différence entre $\Delta T_{obs}^{m,n}$ et $\Delta T_{sim}^{m,n}$ est intégrée dans une fonction objectif globale que minimise à la fois cette différence et l'écart entre les impédances sismiques.

Pour déterminer l'épaisseur en temps simulée entre les marqueurs *m et n* $(\Delta T_{sim}^{m,n})$, on procède de la façon suivante. Dans le maillage du modèle géologique, les mailles sont repérées, en trois dimensions, par leurs coordonnées *i,j,k*. Entre ces deux marqueurs et pour *i* et *j* donnés, *k* varie de $k_n$ à $k_m$. (indices verticaux des mailles contenant les marqueurs sismiques). L'épaisseur en temps d'une maille (*i,j,k*) est notée *dT(i,j,k)*. On a ainsi :

$$\Delta T_{sim}^{m,n} = \sum_{k=k_n}^{k_m} dT(i,j,k)$$

L'épaisseur *dT(i,j,k)* est calculée à partir de l'habillage du modèle géologique en vitesse sismique. En effet, chaque maille est renseignée en vitesses des ondes P ($V_P$) simulées au cours de la construction du modèle pétroélastique

Soit $dz_{sim}(i,j,k)$ l'épaisseur simulée en mètre de la maille de coordonnées *i,j, k*, et soit $V_P^{sim}(i,j,k)$ la vitesse sismique simulée de cette maille, alors l'épaisseur en temps de parcours de cette cellule, *dT(i,j,k)*, est égale à $\dfrac{dz_{sim}(i,j,k)}{V_P^{sim}(i,j,k)}$.

On obtient ainsi :

$$\Delta T_{sim}^{m,n} = \sum_{k=k_n}^{k_m} \frac{dz_{sim}(i,j,k)}{V_P^{sim}(i,j,k)}$$

Cette somme est calculée pour chaque couple de marqueurs sismiques consécutifs. Cette somme est comparée dans la fonction objectif à l'épaisseur en temps issue du pointé $\Delta T_{obs}^{m,n}$.

*2.2- Définition de la fonction objectif*

La mise à jour du modèle géologique est réalisée par la minimisation d'une fonction objectif mesurant l'erreur entre les données observées et les résultats de simulation obtenus pour une valeur fixée des paramètres.

Plusieurs formulations sont envisageables mais celle au sens des moindres carrés est la plus couramment utilisée dans le domaine pétrolier. Dans le cas présent, la fonction objectif que l'on minimise à chaque étape est composée des termes suivants :

- Pour minimiser l'écart avec les impédances sismiques observées : $\left(I_P^{sim} - I_P^{obs}\right)^{\alpha}$ et éventuellement : $\left(I_S^{sim} - I_S^{obs}\right)^{\alpha}$

- Pour minimiser l'écart avec les épaisseurs en temps entre les marqueurs : $\left(\Delta T_{sim}^{m,n} - \Delta T_{obs}^{m,n}\right)^{\alpha}$ tous les couples consécutifs de marqueurs sismiques (*m, n*)

avec $\alpha$ un entier, généralement égal à 2 (on parle de norme L2), mais il est possible d'utiliser d'autres normes que la norme L2.

Une pondération des différents termes est nécessaire pour éviter la dominance d'un terme par rapport à un autre. Cette pondération dépend des erreurs de mesure. L'erreur sur le pointé en temps de la sismique sera introduit à ce niveau

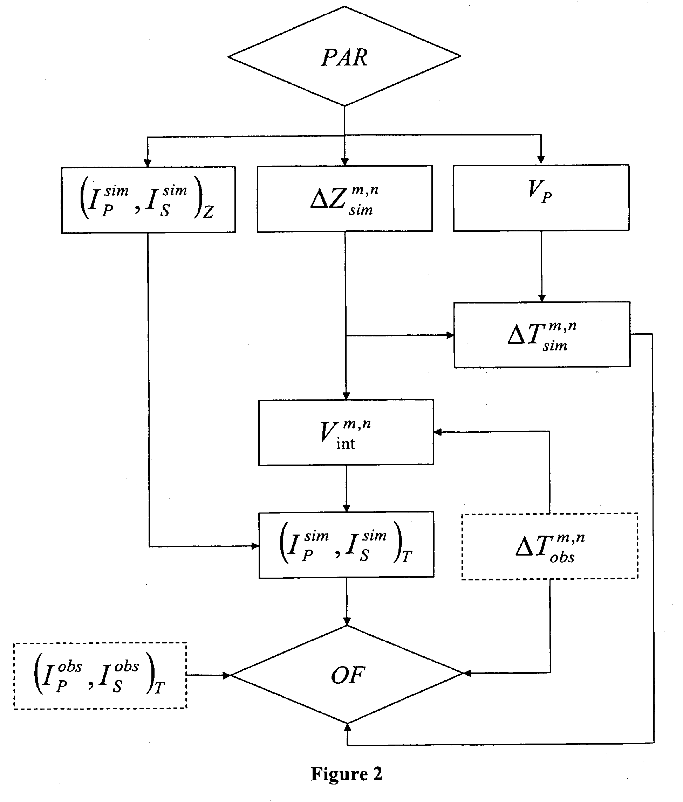

La figure 2 illustre en détail la méthode selon l'invention. L'étape de paramétrisation (*PAR*) fournit via des simulations stochastiques au moins les impédances sismiques en profondeur, $\left(I_P^{sim}, I_S^{sim}\right)_Z$, l'épaisseur en temps des intervalles, $\Delta Z_{sim}^{m,n}$, et la vitesse des ondes P, $V_P$. Puis on calcule l'épaisseur en temps des intervalles $\Delta T_{sim}^{m,n}$, à partir de $\Delta Z_{sim}^{m,n}$ et $V_P$. On simule également la vitesse d'intervalle sur chacun des intervalles, $V_{int}^{m,n}$, à partir de $\Delta Z_{sim}^{m,n}$ et de l'épaisseur en temps des intervalles observées sur les données sismiques (pointé) $\Delta T_{obs}^{m,n}$. On convertit alors $\left(I_P^{sim}, I_S^{sim}\right)_Z$ en temps à l'aide des vitesses de chacun des intervalles $V_{int}^{m,n}$ et l'on obtient $\left(I_P^{sim}, I_S^{sim}\right)_T$. Ces données sont alors comparées au sein de la fonction objectif (*OF*) avec les données observées $\left(I_P^{obs}, I_S^{obs}\right)_T$, et en même temps, $\Delta T_{sim}^{m,n}$ est comparé à $\Delta T_{obs}^{m,n}$.

Si le résultat de la fonction objectif est trop élevé, on modifie les paramètres (PAR) pour simuler de nouvelles valeurs, comme décrit ci-après.

*2.3- Optimisation*

Pour optimiser le modèle géologique, en le rendant cohérent avec les données sismiques tout en respectant l'épaisseur en temps entre deux marqueurs consécutifs, on modifie les paramètres des différents modèles dans le but de modifier le modèle de façon à ce que la fonction objectif soit minimisée.

Dans cet exemple, on utilise de façon préférentielle une méthode particulière pour générer et transformer des réalisations géostatistiques : la méthode des déformations graduelles de façon locale ou globale. Cette méthode est décrite par exemple dans les documents suivants :

- L.-y. Hu. Gradual deformation and iterative calibration of Gaussian-related Stochastic Models. Mathematical Geology Vol. 32, pp. 87-108, 2000.

- L.-y. Hu. Combinaison of dependent realizations within the Gradual Deformation Method. Mathematical Geology Vol. 34, pp. 953-963, 2002.

- L.-y. Hu, G. Blanc. Constraining a reservoir facies model to dynamic data using a gradual deformation method. 6th Conference on the Mathematics of Oil Recovery, Peebles, 1998.

Ce choix peut être effectué pour des raisons de stabilité, de rapidité et de réduction du nombre de paramètres à considérer pour l'optimisation (alors égal au nombre de paramètres de déformations graduelles quelle que soit la taille du maillage).

Cette méthodologie offre une grande souplesse de paramétrisation, c'est-à-dire qu'elle offre un choix élargi de modèle à modifier tout en ayant un nombre de paramètres réduits. Selon la méthode, et selon le mode de réalisation, on peut ainsi :

- ajuster les statistiques des variables pétro élastiques (moyenne, variance, distributions spatiales (variogramme), coefficients de corrélation) selon la méthode de simulation choisie ;

- ajuster les statistiques sur l'erreur ($\varepsilon$) en épaisseur (moyenne, variance, distributions spatiales) ;

- ajuster les paramètres intervenant dans le modèle pétro élastique ;

- ajuster les valeurs des contacts ;

- ajuster les paramètres intervenant dans le calcul des saturations et des pressions initiales ;

En utilisant la technique des déformations graduelles, on peut également :

- ajuster la distribution spatiale des lithofaciès ;

- ajuster les distributions spatiales de variables pétro élastiques ;

- ajuster la distribution spatiale des erreurs en épaisseur (ce qui revient à ajuster l'épaisseur en profondeur des mailles du maillage du modèle géologique) ;

On a illustré la méthode en calant les impédances sismiques et les épaisseurs en temps, mais il est évident que tous types de propriétés, permettant de caractériser le comportement statique ou dynamique du réservoir, peuvent être ajoutées à cette boucle d'optimisation. Il suffit en effet de rajouter un terme dans la fonction objectif, de mesurer les données observables adéquates, et de simuler, de préférence à partir de méthode compatible avec les déformations graduelles, les propriétés souhaitées. On peut par exemple contraindre le modèle géologique également par des données de production.

Après optimisation on obtient un modèle géologique fin renseigné par exemple en porosité, perméabilité, densité et/ou vitesses sismiques, et cohérent avec les données sismiques, et ajusté en temps, et donc en vitesse d'intervalle.

Cette méthodologie s'applique à la modélisation des réservoirs hétérogènes contrainte par les impédances sismiques. Elle s'inscrit aussi dans les calculs d'incertitudes des volumes en place. Elle fournit également un point de départ à la construction de modèles de réservoir (statique et/ou dynamique) contraint par des données de sismique répétée (demande de brevet française EN. 05/05.612), puisqu'elle assure une cohérence avec la sismique de base. Elle permet donc de caractériser un réservoir pétrolier en fournissant des informations fiables sur ces réservoirs afin de prédire leur comportement pour mieux prédire leur production en hydrocarbure et optimiser leur schéma d'exploitation.

**Revendications**

1. Méthode permettant de prédire des caractéristiques pétrophysiques d'un réservoir souterrain, comportant la construction d'un modèle géologique à partir de mesures géologiques acquises en profondeur, la simulation en profondeur de données sismiques, l'acquisition en temps de mesures sismiques sur lesquelles on identifie au moins deux marqueurs sismiques distants l'un de l'autre d'une épaisseur en temps observée $\Delta T_{obs}^{m,n}$, et la mise en cohérence dudit modèle géologique avec lesdites mesures sismiques par minimisation d'une fonction objectif, la méthode étant **caractérisée en ce qu'**elle comporte les étapes suivantes :

   - on simule en profondeur des vitesses sismiques permettant d'estimer l'épaisseur en profondeur $\Delta Z_{est}^{m,n}$ desdits marqueurs, et l'on simule une erreur $\varepsilon_{sim}^{m,n}$ réalisée sur cette estimation ;
   - on réalise une conversion en temps des données sismiques simulées en profondeur à l'aide d'une vitesse d'intervalle déduite de ladite épaisseur en temps observée $\Delta T_{obs}^{m,n}$ et de ladite erreur $\varepsilon_{sim}^{m,n}$ ;
   - on met à jour cette vitesse d'intervalle en comparant, au sein de ladite fonction objectif, ladite épaisseur en temps observée $\Delta T_{obs}^{m,n}$ à une épaisseur en temps $\Delta T_{sim}^{m,n}$ simulée à partir desdites données sismiques, et en modifiant ladite simulation de ladite erreur $\varepsilon_{sim}^{m,n}$ ;
   - on effectue ladite mise en cohérence par minimisation de ladite fonction objectif en comparant lesdites mesures sismiques auxdites données sismiques simulées converties en temps ;
   - on prédit lesdites caractéristiques pétrophysiques dudit réservoir souterrain à partir dudit modèle géologique ainsi mis en cohérence.

2. Méthode selon la revendication 1, dans laquelle la vitesse d'intervalle représente le rapport de l'épaisseur en profondeur $\Delta Z_{est}^{m,n}$ desdits marqueurs corrigée de l'erreur $\varepsilon_{sim}^{m,n}$ par l'épaisseur en temps observée $\Delta T_{obs}^{m,n}$.

3. Méthode selon l'une des revendications précédentes, dans laquelle l'épaisseur en temps $\Delta T_{sim}^{m,n}$ simulée est déterminée à partir des étapes suivantes : pour chaque maille d'un maillage dudit modèle géologique comprise entre lesdits marqueurs, on simule l'épaisseur en profondeur de ladite maille que l'on divise par la vitesse sismique de ladite maille, puis on somme verticalement l'ensemble des rapports obtenus pour les mailles comprises entre lesdits marqueurs.

4. Méthode selon l'une des revendications précédentes, dans laquelle ladite simulation de ladite erreur $\varepsilon_{sim}^{m,n}$ sur l'estimation de l'épaisseur en profondeur, est réalisée à l'aide d'une technique de déformation graduelle.

5. Méthode selon l'une des revendications précédentes, dans laquelle on met en cohérence ledit modèle géologique avec des impédances sismiques d'ondes P et des impédances sismiques d'ondes S.

**Patentansprüche**

1. Verfahren, das das Vorhersagen petrophysikalischer Eigenschaften einer unterirdischen Lagerstätte ermöglicht, das den Aufbau eines geologischen Modells ausgehend von geologischen Messungen, die in der Tiefe erfasst werden, die Simulation seismischer Daten in der Tiefe, die zeitliche Erfassung von seismischen Messungen, in denen mindestens zwei seismische Marken identifiziert werden, die eine beobachtete zeitliche Dicke $\Delta \mathrm{T}_{obs}^{m,n}$ voneinander entfernt sind, und die Abstimmung des geologischen Modells mit den seismischen Messungen durch Minimierung einer Zielfunktion umfasst, wobei das Verfahren **dadurch gekennzeichnet ist, dass** es die folgenden Schritte umfasst:

   - Simulieren von seismischen Geschwindigkeiten in der Tiefe, das das Schätzen der Dicke der Marken in der Tiefe $\Delta Z_{est}^{m,n}$ ermöglicht, und Simulieren eines auf dieser Schätzung ausgeführten Fehlers $\varepsilon_{sim}^{m,n}$;
- Ausführen einer zeitlichen Umwandlung der in der Tiefe simulierten seismischen Daten mittels einer Intervallgeschwindigkeit, die von der beobachteten zeitlichen Dicke $\Delta T_{obs}^{m,n}$ und dem Fehler $\varepsilon_{sim}^{m,n}$ abgeleitet wird;
- Aktualisieren dieser Intervallgeschwindigkeit durch Vergleichen der beobachteten zeitlichen Dicke $\Delta T_{obs}^{m,n}$ mit einer ausgehend von den seismischen Daten simulierten zeitlichen Dicke $\Delta T_{sim}^{m,n}$ innerhalb der Zielfunktion, und durch Ändern der Simulation des Fehlers $\varepsilon_{sim}^{m,n}$;
- Durchführen der Abstimmung durch Minimierung der Zielfunktion durch Vergleichen der seismischen Messungen mit den zeitlich umgewandelten simulierten seismischen Daten;
- Vorhersagen der petrophysikalischen Eigenschaften der unterirdischen Lagerstätte ausgehend von dem so abgestimmten geologischen Modell.

2. Verfahren nach Anspruch 1, wobei die Intervallgeschwindigkeit das Verhältnis der Dicke in der Tiefe $\Delta Z_{est}^{m,n}$ der von dem Fehlern $\varepsilon_{sim}^{m,n}$ korrigierten Marken durch die beobachtete zeitliche Dicke $\Delta T_{obs}^{m,n}$ darstellt.

3. Verfahren nach einem der vorhergehenden Ansprüche, wobei die simulierte zeitliche Dicke $\Delta T_{sim}^{m,n}$ ausgehend von den folgenden Schritten bestimmt wird: für jede Masche eines Gitternetzes des geologischen Modells, das zwischen den Marken enthalten ist, Simulieren der Dicke der Masche in der Tiefe, die durch die seismische Geschwindigkeit der Masche geteilt wird, und dann vertikales Summieren sämtlicher Verhältnisse, die für die Maschen erhalten werden, die zwischen den Marken enthalten sind.

4. Verfahren nach einem der vorhergehenden Ansprüche, wobei die Simulation des Fehlers $\varepsilon_{sim}^{m,n}$ bei der Schätzung der Dicke in der Tiefe mittels einer graduellen Verformungstechnik ausgeführt wird.

5. Verfahren nach einem der vorhergehenden Ansprüche, wobei das geologische Modell mit seismischen Impedanzen der P-Wellen und seismischen Impedanzen der S-Wellen abstimmt wird.

## Claims

1. A method allowing to predict petrophysical characteristics of an underground reservoir, comprising constructing a geologic model from geologic measurements acquired in depth, simulating in depth seismic data, acquisition in time of seismic measurements on which at least two seismic markers distant from one another by an observed thickness in time $\Delta T_{obs}^{m,n}$ are identified, and making said geologic model consistent with said seismic measurements by minimizing an objective function, the method being **characterized in that** it comprises the following stages:

   - simulating in depth seismic velocities allowing to estimate the thickness in depth $\Delta Z_{est}^{m,n}$ of said markers, and simulating an error $\varepsilon_{sim}^{m,n}$ made on this estimation,
   - carrying out time conversion of the seismic data simulated in depth by means of an interval velocity deduced from said observed thickness in time $\Delta T_{obs}^{m,n}$ and from said error $\varepsilon_{sim}^{m,n}$,
   - updating this interval velocity by comparing, within said objective function, said observed thickness in time $\Delta T_{obs}^{m,n}$ with a thickness in time $\Delta T_{sim}^{m,n}$ simulated from said seismic data, and by modifying said simulation of said error $\varepsilon_{sim}^{m,n}$,
   - carrying out said consistency enforcement operation by minimization of said objective function by comparing said seismic measurements with said simulated seismic data converted to time,
   - predicting said petrophysical characteristics of said underground reservoir from said geologic model thus consistent.

2. A method as claimed in claim 1, wherein the interval velocity represents the ratio of the thickness in depth $\Delta Z_{est}^{m,n}$ of said markers corrected for error $\varepsilon_{sim}^{m,n}$ to the observed thickness in time $\Delta T_{obs}^{m,n}$.

3. A method as claimed in any one of the previous claims, wherein the simulated thickness in time $\Delta T_{sim}^{m,n}$ is determined from the following stages: for each cell of a grid of said geologic model contained between said markers, the thickness in depth of said cell is simulated and divided by the seismic velocity of said cell, then all of the ratios obtained for the cells contained between said markers are vertically stacked.

4. A method as claimed in any one of the previous claims, wherein said simulation of said error $\varepsilon_{sim}^{m,n}$ on the estimation of the thickness in depth is performed by means of a gradual deformation technique.

5. A method as claimed in any one of the previous claims, wherein said geologic model is made consistent with seismic impedances of P waves and seismic impedances of S waves.

**Figure 1**

**Figure 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9738330 A
- US 6302221 B1
- EP 1081510 A1

**Littérature non-brevet citée dans la description**

- Mining Geostatistics. **JOURNEL A. ; HUIJBREGTS C.** Centre de géostatistique et de morphologie mathématique. Academic press, 1978
- **TONELLOT, T. ; MACÉ, D. ; RICHARD, V.** Joint stratigraphic inversion of angle-limited stacks. *71st Ann.Internal. Mtg., Soc. Expl. Geophys., Expanded Abstracts, AVO 2.6,* 2001, 227-230
- Constraining Stochastic Images to Seismic Data. **BORTOLI, L.J. ; ALABERT F. ; HAAS A. ; JOURNEL, A.G.** Geostatistics Troia 82. Kluwer, 1993, 325-337
- **DOYEN P.M.** Porosity from Seismic Data: A Geostatistical Approach. *Geophysics,* 1988, vol. 53 (10), 1263-1275
- **MATHERON G. ; BEUCHER H. ; DE FOUQUET C. ; GALLI A. ; GUERILLOT D. ; RAVENNE C.** Conditional simulation of the geometry of fluvio deltaic reservoirs. *SPE 62nd Annual Conference, Dallas, Texas,* 1987, 591-599
- **MATHERON G. ; BEUCHER H. ; DE FOUQUET C. ; GALLI A ; RAVENNE C.** Simulation conditionnelle à trois faciès dans une falaise de la formation du Brent. Sciences de la Terre. *Série Informatique Géologique,* 1988, vol. 28, 213-249
- the Pros and Cons of the Truncated Gaussian Method. **GALLI A. ; BEUCHER H. ; LE LOC'H G. ; DOLIGEZ B.** Geostatistical Simulations. Kluwer Academic Publishers, 1993, 217-233
- **L.-Y. HU.** Gradual deformation and iterative calibration of Gaussian-related Stochastic Models. *Mathematical Geology,* 2000, vol. 32, 87-108
- **M. LE RAVALEC-DUPIN ; B. NOETINGER.** Optimization with the Gradual Deformation Method. *Mathematical Geology,* 01 Février 2002, vol. 34 (2), 125-142
- **L.-Y. HU.** Gradual deformation and iterative calibration of Gaussian-related Stochastic Models. *Mathematical Geology,* 2000, vol. 32, 87-108
- **L.-Y. HU.** Combinaison of dependent realizations within the Gradual Deformation Method. *Mathematical Geology,* 2002, vol. 34, 953-963
- **L.-Y. HU ; G. BLANC.** Constraining a reservoir facies model to dynamic data using a gradual deformation method. *6th Conference on the Mathematics of Oil Recovery, Peebles,* 1998